# EUROPEAN PATENT APPLICATION

(11) **EP 2 597 108 A1**
(43) Date of publication of application: **29.05.2013**
(21) Application number: 12194574.5
(22) Date of filing: 28.11.2012
(51) Int. Cl.: C08G 18/68, C08G 18/71, C08L 75/14, C08L 9/00, G03F 7/00

(54) **Resin composition for laser engraving, flexographic printing plate precursor for laser engraving and process for producing same, and flexographic printing plate and process for making same**

(30) Priority: 28.11.2011 JP 2011259405
(71) Applicant: Fujifilm Corporation, Minato-ku Tokyo (JP)
(72) Inventor: Sugasaki, Atsushi, Shizuoka (JP)
(74) Representative: HOFFMANN EITLE

(57) **Abstract**

Disclosed are a resin composition for laser engraving, comprising (Component A) at least one polymer selected from the group consisting of following (Component A-1) to (Component A-3), (Component B) a polyfunctional ethylenically unsaturated compound, and (Component C) a polymerization initiator,
(Component A-1) a polyisoprene that is a plastomer at 20°C and does not have an ethylenically unsaturated group at the ends of the main chain,
(Component A-2) a polybutadiene that is a plastomer at 20°C and does not have an ethylenically unsaturated group at the ends of the main chain, and
(Component A-3) an unsaturated polyester urethane that is a plastomer at 20°C, has an ethylenically unsaturated group in the interior of the main chain, and does not have an ethylenically unsaturated group at the ends of the main chain.

## Description

The present invention relates to a resin composition for laser engraving, a flexographic printing plate precursor for laser engraving and a process for producing the same, and a flexographic printing plate and a process for making the same.

A large number of so-called 'direct engraving CTP methods', in which a relief-forming layer is directly engraved by means of a laser are proposed. In the method, a laser light is directly irradiated to a flexographic printing plate precursor to cause thermal decomposition and volatilization in relief forming layer by photothermal conversion, thereby forming a concave part. Differing from a relief formation using an original image film, the direct engraving CTP method can control freely relief shapes. Consequently, when such image as an outline character is to be formed, it is also possible to engrave that region deeper than other regions, or, in the case of a fine halftone dot image, it is possible, taking into consideration resistance to printing pressure, to engrave while adding a shoulder. With regard to the laser for use in the method, a high-power carbon dioxide laser is generally used. In the case of the carbon dioxide laser, all organic compounds can absorb the irradiation energy and convert it into heat. On the other hand, inexpensive and small-sized semiconductor lasers have been developed, wherein, since they emit visible lights and near infrared lights, it is necessary to absorb the laser light and convert it into heat.

As a resin composition for laser engraving, those described in JP-B-2846954 (JP-B denotes a Japanese examined patent application publication), JP-A-2004-262136 (JP-A denotes a Japanese unexamined patent application publication) or JP-A-2011-510839 are known.

An object of the present invention is to provide a resin composition for laser engraving which can produce a flexographic printing plate having satisfactory rinsing properties of engraving residue and excellent ink transfer properties, a flexographic printing plate precursor using the resin composition for laser engraving, a process for producing the flexographic printing plate precursor, a process for making a flexographic printing plate by using the flexographic printing plate precursor, and a flexographic printing plate obtained by the process for making a flexographic printing plate.

The above object of the present invention has been achieved by the means described in the following <1>, <7> to <9>, <11>, <12>, and <15>. Preferable embodiments <2> to <6>, <10>, <13> and <14> will also be described below.
<1> A resin composition for laser engraving, comprising (Component A) at least one polymer selected from the group consisting of following (Component A-1) to (Component A-3), (Component B) a polyfunctional ethylenically unsaturated compound, and (Component C) a polymerization initiator,
   (Component A-1) a polyisoprene that is a plastomer at 20°C and does not have an ethylenically unsaturated group at the ends of the main chain,
   (Component A-2) a polybutadiene that is a plastomer at 20°C and does not have an ethylenically unsaturated group at the ends of the main chain, and
   (Component A-3) an unsaturated polyester urethane that is a plastomer at 20°C, has an ethylenically unsaturated group in the interior of the main chain, and does not have an ethylenically unsaturated group at the ends of the main chain,
<2> the resin composition for laser engraving as described in <1>, further comprising (Component D) silica particles,
<3> the resin composition for laser engraving as described in <2>, wherein the content of Component D in the resin composition is 5 wt% to 15 wt% relative to the total weight of the solids content,
<4> the resin composition for laser engraving as described in any one of <1> to <3>, further comprising (Component E) a photothermal conversion agent,
<5> the resin composition for laser engraving as described in any one of <1> to <4>, wherein Component A is Component A-3,
<6> the resin composition for laser engraving as described in any one of <1> to <5>, wherein the content of Component A in the resin composition is 30 wt% to 80 wt% relative to the total weight of the solids content,
<7> a flexographic printing plate precursor for laser engraving, having a relief-forming layer comprising the resin composition for laser engraving as described in any one of <1> to <6>,
<8> a flexographic printing plate precursor for laser engraving, having a crosslinked relief-forming layer produced by crosslinking a relief-forming layer comprising the resin composition for laser engraving as described in any one of <1> to <6>, by means of light and/or heat,
<9> A process for producing a flexographic printing plate precursor for laser engraving, the process comprising, a layer formation step of forming a relief-forming layer comprising the resin composition for laser engraving as described in any one of <1> to <6>, and a crosslinking step of crosslinking the relief-forming layer by means of light and/or heat to obtain a flexographic printing plate precursor having a crosslinked relief-forming layer,
<10> the process for producing a flexographic printing plate precursor for laser engraving as described in <9>, wherein the crosslinking step is a step of crosslinking the relief-forming layer by means of heat to obtain the flexographic printing plate precursor having the crosslinked relief-forming layer,
<11> a process for making a flexographic printing plate, the process comprising, in the following order, a step of preparing a flexographic printing plate precursor for laser engraving having a crosslinked relief-forming layer produced by crosslinking a relief-forming layer comprising the resin composition for laser engraving as described in any one of <1> to <6> by means of light and/or heat; and an engraving step of laser-engraving the crosslinked relief-forming layer to form a relief layer,
<12> a flexographic printing plate having a relief layer made by the process for making a flexographic printing plate as described in <11>,
<13> the flexographic printing plate as described in <12>, wherein the thickness of the relief layer is at least 0.05 mm but no greater than 10 mm,
<14> the flexographic printing plate as described in <11> or <12>, wherein the Shore A hardness of the relief layer is at least 50° but no greater than 90°, and
<15> use of the resin composition for laser engraving as described in any one of <1> to <6> in a flexographic printing plate precursor for laser engraving.

According to the present invention, a resin composition for laser engraving which can produce a flexographic printing plate having satisfactory rinsing properties of engraving residue and excellent ink transfer properties, a flexographic printing plate precursor using the resin composition for laser engraving, a process for producing the flexographic printing plate precursor, a process for making a flexographic printing plate by using the flexographic printing plate precursor, and a flexographic printing plate obtained by the process for making a flexographic printing plate, can be provided.

The present invention is explained in detail below.

In the present invention, the notation 'lower limit to upper limit', which expresses a numerical range, means 'at least the lower limit but no greater than the upper limit', and the notation 'upper limit to lower limit' means 'no greater than the upper limit but at least the lower limit'. That is, they are numerical ranges that include the upper limit and the lower limit.

Furthermore, '(Component B) a polyfunctional ethylenically unsaturated compound' etc. are simply called 'Component B' etc.

### (Resin composition for laser engraving)

The resin composition for laser engraving (hereinafter also called simply a 'resin composition') of the present invention, comprising (Component A) at least one polymer selected from the group consisting of following (Component A-1) to (Component A-3), (Component B) a polyfunctional ethylenically unsaturated compound, and (Component C) a polymerization initiator,
(Component A-1) a polyisoprene that is a plastomer at 20°C and does not have an ethylenically unsaturated group at the ends of the main chain,
(Component A-2) a polybutadiene that is a plastomer at 20°C and does not have an ethylenically unsaturated group at the ends of the main chain, and
(Component A-3) an unsaturated polyester urethane that is a plastomer at 20°C, has an ethylenically unsaturated group in the interior of the main chain, and does not have an ethylenically unsaturated group at the ends of the main chain.

The resin composition of the present invention may be used without any particular limitation in a wide range of other applications in addition to a relief-forming layer of a flexographic printing plate precursor that is subjected to laser engraving. For example, it may be used not only in formation of a relief-forming layer of a printing plate precursor for which formation of a raised relief is carried out by laser engraving, which is described in detail later, but also in formation of another material form in which asperities or apertures are formed on the surface, for example, various types of printing plates or various types of moldings in which an image is formed by laser engraving, such as an intaglio plate, a stencil plate, or a stamp.

Among them, a preferred embodiment is use in formation of a relief-forming layer provided on an appropriate support.

In regard to the resin composition of the present invention, the mechanism of action that is speculated for the use of Component A to Component C will be described below.

It is thought that a portion of the ethylenically unsaturated bond carried by Component A is crosslinked by the action of Component C, and a crosslinked structure is formed between the molecules of Component A or between the molecules of Component A and Component B. Since Component A is a plastomer, it is speculated that rubber elasticity obtainable at the time of crosslinking is satisfactory, and thus ink transfer properties are improved. Furthermore, it is speculated that since a portion of the ethylenically unsaturated bond carried by Component A forms a crosslinked structure, the rinsing properties are also enhanced.

In the present specification, when a flexographic printing plate precursor is explained, a layer that comprises Component A to Component

C and serves as an image-forming layer subjected to laser engraving, that has a flat surface, and that is an uncrosslinked crosslinkable layer is called a relief-forming layer, a layer that is formed by crosslinking the relief-forming layer is called a crosslinked relief-forming layer, and a layer that has asperities formed on the surface by laser engraving the crosslinked relief-forming layer is called a relief layer.

Constituent components used in the resin composition for laser engraving of the present invention are explained below.

### (Component A) At least one polymer selected from the group consisting of (Component A-1) to (Component A-3)

The resin composition for laser engraving of the present invention comprises (Component A) at least one polymer (binder polymer) selected from the group consisting of above-mentioned (Component A-1) to (Component A-3).

The term 'plastomer' as used in the present invention means, as described in 'Shinpan Kobunshi Jiten (Newly-published Polymer Encyclopedia) ' edited by the Society of Polymer Science, Japan (published in 1988 by Asakura Publishing Co., Ltd., Japan), a macromolecule which has a property of easily undergoing fluid deformation by heating and being capable of solidifying into a deformed shape by cooling. The term 'plastomer' is a term opposed to the term 'elastomer' (a polymer having a property of, when an external force is added, instantaneously deforming in accordance with the external force, and when the external force is removed, being restored to the original shape in a short time), and the plastomer does not exhibit the same elastic deformation as that exhibited by an elastomer, and easily undergoes plastic deformation.

In the present invention, a plastomer means a polymer which, when the original size is designated as 100%, can be deformed up to 200% of the original size by a small external force at room temperature (20°C), and even if the external force is removed, does not return to 130% or less of the original size. More particularly, the plastomer means a polymer with which, based on the tensile permanent strain test of JIS K 6262-1997, an I-shaped specimen can be extended to 2 times the gauge length before pulling in a tensile test at 20°C, and the tensile permanent strain measured after extending the specimen to 2 times the gauge length before pulling, subsequently maintaining the specimen for 5 minutes, removing the external tensile force, and maintaining the specimen for 5 minutes, is 30% or greater.

Meanwhile, in the case of a polymer that cannot be subjected to the measurement described above, a polymer which is deformed even if an external force is not applied and does not return to the original shape, corresponds to a plastomer, and for example, a syrup-like resin, an oil-like resin, and a liquid resin correspond thereto.

Furthermore, the plastomer according to the present invention is such that the glass transition temperature (Tg) of the polymer is lower than 20°C. In the case of a polymer having two or more Tg's, all the Tg's are lower than 20°C.

The viscosity of Component A at 20°C is preferably 10 Pa·s to 10 kPa·s, and more preferably 50 Pa·**s** to 5 kPa·s. When the viscosity is in this range, the resin composition can be easily molded into a sheet-like or cylindrical printing plate precursor, and the process is also simple and easy. In the present invention, since Component A is a plastomer, when the printing plate precursor for laser engraving obtainable from the resin composition is molded into a sheet form or a cylindrical form, a satisfactory thickness accuracy or a satisfactory dimensional accuracy can be achieved.

Furthermore, in the present invention, 'main chain' means the relatively longest bonded chain in the molecule of a polymer compound that constitutes a resin, and 'side chain' means a carbon chain that is branched from the main chain, while the side chain may contain heteroatoms. Meanwhile, for example, in Component A-3, the 'main chain' means the longest bonded chain having an ester bond.

In the present invention, the 'end of the main chain' refers to the carbon atom located at an end of the 'main chain', and the 'ethylenically unsaturated group at the end of the main chain' refers to a double bond (ethylenically unsaturated bond) between the carbon atom located at the end of the main chain and the carbon atom adjacent thereto.

Furthermore, in the present invention, the 'interior of the main chain' refers to the position of a carbon atom other than the carbon atom at an end of the 'main chain', and the 'ethylenically unsaturated group in the interior of the main chain' refers to a double bond between carbon atoms other than the carbon atoms located at the ends of the main chain.

Hereinafter, Component A-1 to Component A-3 will be described in detail.

### (Component A-1) Polyisoprene that is a plastomer at 20°C and does not have an ethylenically unsaturated group at the ends of the main chain

According to the present invention, (Component A-1) a polyisoprene that is a plastomer at 20°C and does not have an ethylenically unsaturated group at the ends of the main chain can be used as Component A. When Component A-1 has an ethylenically unsaturated group at the ends of the main chain, the mobility of the main chain after crosslinking is suppressed, and as a result, the glass transition temperature increases. Therefore, there is a concern that the rubber elasticity that is needed for flexographic printing may be impaired and satisfactory ink transfer properties may not be obtained. If Component A-1 has an ethylenically unsaturated group in the interior of the main chain, it is expected that a decrease in the mobility is not large as it is in the case of the main chain ends, and thus the glass transition temperature does not easily increase.

Component A-1 may be a polymer having a main chain which contains isoprene as a monomer unit, and a terminal-modified polyisoprene or a hydrogenated polyisoprene is included in Component A-1. Examples of Component A-1 include polyisoprene, partially hydrogenated polyisoprene and polyisoprene polyol, and polyisoprene and polyisoprene polyol are preferred, while polyisoprene polyol is particularly preferred. Polyisoprene polyol is preferred in view of the compatibility with other components.

Furthermore, commercially available polyisoprene and polyisoprene polyol can also be used as Component A-1, and the examples thereof include KURAPRENE LIR series (manufactured by Kuraray Co., Ltd.).

Isoprene is known to be polymerized by 1,2-addition, 3,4-addition, or 1,4-addition depending on the catalyst or the reaction conditions, and in the present invention, isoprene that is polymerized by any of the additions described above may be employed. Meanwhile, in the 1,2-addition and the 3,4-addition, the polyisoprene has an ethylenically unsaturated group at the side chain end, but does not have an ethylenically unsaturated group at the main chain end, and in the 1,4-addition (cis- and *trans-*), the polyisoprene does not have an ethylenically unsaturated group at the main chain end, and an ethylenically unsaturated group is formed between the second carbon atom and the third carbon atom from the end.

Among these, from the viewpoint that the polymer needs to be a plastomer at 20°C, it is preferable that a 1,4-addition product be a main component; it is more preferable that *cis*-1,4-polyisoprene be a main component; and it is even more preferable that *cis*-1,4-polyisoprene constitutes 80% or more, and more preferably 90% or more.

The molecular weight of Component A-1 is not particularly limited so long as it is a plastomer at 20°C, but from the viewpoint of the tensile strength of the film, the weight-average molecular weight thereof is preferably 5,000 to 500,000, more preferably 8,000 to 300,000, and even more preferably 10,000 to 200,000.

### (Component A-2) Polybutadiene that is a plastomer at 20°C and does not have an ethylenically unsaturated group at the ends of the main chain

According to the present invention, (Component A-2) a polybutadiene that is a plastomer at 20°C and does not have an ethylenically unsaturated group at the ends of the main chain can be used as Component A. When Component A-2 has an ethylenically unsaturated group at the ends of the main chain, the mobility of the main chain after crosslinking is suppressed, and as a result, the glass transition temperature increases. Therefore, there is a concern that the rubber elasticity that is needed for flexographic printing may be impaired and satisfactory ink transfer properties may not be obtained. If Component A-2 has an ethylenically unsaturated group in the interior of the main chain, it is expected that a decrease in the mobility is not large as it is in the case of the main chain ends, and thus the glass transition temperature does not easily increase.

Component A-2 may be a polymer having a main chain which contains butadiene as a monomer unit, and a terminal-modified polybutadiene or a hydrogenated polybutadiene is included in Component A-2. Examples of Component A-2 include polybutadiene, partially hydrogenated polybutadiene and polybutadiene polyol, and polybutadiene and polybutadiene polyol are preferred, while polybutadiene polyol is particularly preferred. Polybutadiene polyol is preferred from the viewpoint of the compatibility with other components.

Furthermore, commercially available polybutadiene and polybutadiene polyol can also be used as Component A-2, and the examples thereof include KURAPRENE LBR series (manufactured by Kuraray Co., Ltd.) and Poly bd (manufactured by Idemitsu Kosan Co., Ltd.).

Butadiene is known to be polymerized by 1,2-addition or 1,4-addition depending on the catalyst or the reaction conditions, and in the present invention, polybutadiene polymerized by any of the additions described above may be employed. Meanwhile, in the 1,2-addition, the polybutadiene has an ethylenically unsaturated group at the side chain end, but does not have an ethylenically unsaturated group at the main chain end and in the 1,4-addition (*cis*- and *trans*-), the polybutadiene does not have an ethylenically unsaturated group at the main chain end, and an ethylenically unsaturated group is formed between the second carbon atom and the third carbon atom from the end.

Among these, from the viewpoint that the polymer needs to be a plastomer at 20°C, it is preferable that a 1,4-addition product be a main component, and it is more preferable that *trans*-1,4-polybutadiene be a main component.

The molecular weight of Component A-2 is not particularly limited so long as it is a plastomer at 20°C, but from the viewpoint of the tensile strength of the film, the weight-average molecular weight thereof is preferably 1,500 to 500,000, more preferably 2,000 to 300,000, and even more preferably 2,500 to 200,000.

(Component A-3) Unsaturated polyester urethane that is a plastomer at 20°C, has an ethylenically unsaturated group in the interior of the main chain, and does not have an ethylenically unsaturated group at the ends of the main chain

According to the present invention, (Component A-3) an unsaturated polyester urethane that is a plastomer at 20°C, has an ethylenically unsaturated group in the interior of the main chain, and does not have an ethylenically unsaturated group at the ends of the main chain, can be used as Component A. When Component A-3 has an ethylenically unsaturated group at the ends of the main chain, the mobility of the main chain after crosslinking is suppressed, and as a result, the glass transition temperature increases. Therefore, there is a concern that the rubber elasticity that is needed for flexographic printing may be impaired and satisfactory ink transfer properties may not be obtained. If Component A-3 has an ethylenically unsaturated group in the interior of the main chain, it is expected that a decrease in the mobility is not large as it is in the case of the main chain ends, and thus the glass transition temperature does not easily increase.

Component A-3 is obtained by allowing an unsaturated polyester polyol to react with various polyisocyanate compounds. Furthermore, the unsaturated polyester polyol is obtained by a polycondensation reaction between a polyvalent carboxylic acid component including an unsaturated polycarboxylic acid and a polyhydric alcohol component, and in the process, when a slight excess amount of the polyalcohol component is used, the ends of the product can be modified with hydroxyl groups.

The polycarboxylic acid component of the unsaturated polyester polyol is preferably a dicarboxylic acid, and the examples thereof include unsaturated dicarboxylic acid, and aromatic, alicyclic or aliphatic dicarboxylic acids.

Specific examples of the unsaturated dicarboxylic acid include *α,β-*unsaturated dicarboxylic acids such as maleic acid, maleic anhydride, fumaric acid, and itaconic acid.

Specific examples of the aromatic dicarboxylic acid include phthalic acid, isophthalic acid, phthalic anhydride, terephthalic acid, 2,6-naphthalenedicarboxylic acid, 2,7-naphthalenedicarboxylic acid, 2,3-naphthalenedicarboxylic acid, 2,3-naphthalenedicarboxylic anhydride, and 4,4'-bisphenyldicarboxylic acid. Specific examples of the alicyclic dicarboxylic acid include tetrahydrophthalic anhydride, tetrahydrophthalic acid, hexahydrophthalic acid, hexahydrophthalic anhydride, hexahydroterephthalic acid, and hexahydroisophthalic acid. Specific examples of the aliphatic carboxylic acid include succinic acid, adipic acid, sebacic acid, malonic acid, glutaric acid, and sebacic acid.

Furthermore, the dialkyl esters thereof may also be used.

The polyhydric alcohol component of the unsaturated polyester polyol is preferably a diol, and the examples thereof include alkylenediols and polyoxyalkylene glycols.

Specific examples of the alkylenediol include ethylene glycol, propylene glycol, trimethylene glycol, tetramethylene glycol, hexamethylene glycol, and neopentyl glycol. Specific examples of the polyoxyalkylene glycol include diethylene glycol, triethylene glycol, polyoxypropylene glycol, and polyoxytetramethylene glycol.

In the unsaturated polyester, in order to enhance heat resistance of the flexographic printing plate precursor, a double bond is introduced into a portion of the polyvalent carboxylic acid component by using an unsaturated polyvalent carboxylic acid. The double bond concentration is preferably 10⁻⁴ mol/g to 10⁻² mol/g relative to the amount of Component A-4 thus obtained. If the double bond concentration is 10⁻⁴ mol/g or greater, deformation of the relief is suppressed, and if the double bond concentration is 10⁻² mol/g or less, excellent strength is obtained.

In the present invention, as the isocyanate used to obtain Component A-3, a polyvalent isocyanate compound having two or more isocyanate groups in the molecule is employed. Specific examples of diisocyanate include 2,6-tolylene diisocyanate, 2,4-tolylene diisocyanate, *p*-xylylene diisocyanate, m-xylylene diisocyanate, hydrated *p*-xylylene diisocyanate, hydrated m-xylylene diisocyanate, isophorone diisocyanate, 1,6-hexamethylene diisocyanate, trimethylhexamethylene diisocyanate, lysine diisocyanate, 1,3-bis(isocyanatomethyl)cyclohexane, norbornane diisocyanate methyl, dicyclohexylmethane diisocyanate, 4,4'-diphenylmethane diisocyanate, naphthalene diisocyanate, *p*-phenylene diisocyanate, diphenylmethane diisocyanate (MDI), and hydrogenated diphenylmethane diisocyanate.

Furthermore, the adducts or the oligomers of the various isocyanates described above can also be used. The examples thereof include adducts of tolylene diisocyanate and tolylene diisocyanate trimer. Furthermore, biuret type and isocyanurate type polyisocyanates obtainable by a co-reaction with water can also be used.

Regarding the isocyanate compounds, one kind may be used alone, or two or more kinds may be used in combination.

As Component A-3, commercially available polyester urethanes may be used, and the examples thereof include VYLON series (manufactured by Toyoboseki Co., Ltd.).

The molecular weight of Component A-3 is not particularly limited so long as Component A-3 is a plastomer at 20°C, but from the viewpoint of the tensile strength of the film, the weight-average molecular weight thereof is preferably 5,000 to 500,000, more preferably 8,000 to 300,000, and even more preferably 10,000 to 200,000.

Component A may be at least one selected from the group consisting of Component A-1 to Component A-3, and two or more may also be used in combination.

Furthermore, Component A is preferably Component A-1 or Component A-3, and more preferably Component A-3.

The content of Component A in the resin composition is preferably 5 wt% to 90 wt%, more preferably 15 wt% to 85 wt%, and even more preferably 30 wt% to 80 wt%, relative to the total weight of the solids content. If the content of Component A is in the range described above, a relief layer having excellent rinsing properties of engraving residue and excellent ink transfer properties are obtained, which is preferable.

The resin composition for laser engraving of the present invention may comprise a binder polymer (resin component) other than Component A. The examples of the binder polymer other than Component A include the non-elastomers described in JP-A-2011-136455, and the unsaturated group-containing polymers described in JP-A-2010-208326.

The resin composition for laser engraving of the present invention preferably comprises Component A as a main component of the binder polymers, and if the resin composition comprises other binder polymers, the content of Component A relative to the total weight of the binder polymers is preferably 60 wt% or greater, more preferably 70 wt% or greater, and even more preferably 80 wt% or greater. Meanwhile, the upper limit of the content of Component A is not particularly limited, and is especially preferably 100 wt%, that is, it is especially preferable that the resin composition comprises no other binder polymers other than Component A. However, if the resin composition comprises other binder polymers, the upper limit thereof is preferably 99 wt% or less, more preferably 97 wt% or less, and even more preferably 95 wt% or less.

### (Component B) Polyfunctional ethylenically unsaturated compound

The resin composition for laser engraving of the present invention comprises (Component B) a polyfunctional ethylenically unsaturated compound.

Furthermore, the polyfunctional ethylenically unsaturated compound that can be used in the present invention preferably has a molecular weight (or weight average molecular weight) of less than 5,000.

The polyfunctional ethylenically unsaturated compound is a compound having two or more ethylenically unsaturated groups. Regarding the polyfunctional ethylenically unsaturated compound, one kind may be used alone, or two or more kinds may be used in combination.

Furthermore, the compound group which belongs to ethylenically unsaturated compounds is widely known in the pertinent industrial fields, and in the present invention, these compounds can be used without particular limitations. These compounds have chemical forms such as, for example, monomer, prepolymer (namely, dimer, trimer and oligomer), or copolymer thereof, and mixture thereof.

As the polyfunctional ethylenically unsaturated compound, a polyfunctional monomer is preferably used. Molecular weights of these polyfunctional monomers are preferably 200 to 2,000.

As the polyfunctional monomer, a compound having 2 to 20 terminal ethylenically unsaturated groups is preferable.

Examples of the polyfunctional monomer include unsaturated carboxylic acids (such as acrylic acid, methacrylic acid, itaconic acid, crotonic acid, isocrotonic acid and maleic acid), and esters and amides thereof. Preferably esters of an unsaturated carboxylic acid and an aliphatic polyhydric alcoholic compound, or amides of an unsaturated carboxylic acid and an aliphatic polyvalent amine compound are used. Moreover, addition reaction products of unsaturated carboxylic acid esters or amides having a nucleophilic substituent such as a hydroxyl group or an amino group with polyfunctional isocyanates or epoxies, and dehydrating condensation reaction products with a polyfunctional carboxylic acid, etc. are also used favorably. Moreover, addition reaction products of unsaturated carboxylic acid esters or amides having an electrophilic substituent such as an isocyanato group or an epoxy group with monofunctional or polyfunctional alcohols or amines, and substitution reaction products of unsaturated carboxylic acid esters or amides having a leaving group such as a halogen group or a tosyloxy group with monofunctional or polyfunctional alcohols or amines are also favorable. Moreover, as another example, the use of compounds obtained by replacing the unsaturated carboxylic acid with a vinyl compound, an allyl compound, an unsaturated phosphonic acid, styrene or the like is also possible.

The ethylenically unsaturated group which is comprised in the polyfunctional monomer described above is preferably an residue of an acrylate compound, a methacrylate compound, a vinyl compound, or an aryl compound, and particularly preferably an acrylate compound or a methacrylate compound, from the viewpoint of reactivity.

Specific examples of ester monomers comprising an ester of an aliphatic polyhydric alcohol compound and an unsaturated carboxylic acid include acrylic acid esters such as ethylene glycol diacrylate, triethylene glycol diacrylate, polyethylene glycol diacrylate, 1,3-butanediol diacrylate, tetramethylene glycol diacrylate, propylene glycol diacrylate, neopentyl glycol diacrylate, trimethylolpropane triacrylate, trimethylolpropane tri(acryloyloxypropyl) ether, trimethylolethane triacrylate, hexanediol diacrylate, 1,4-cyclohexanediol diacrylate, tetraethylene glycol diacrylate, pentaerythritol diacrylate, pentaerythritol triacrylate, pentaerythritol tetraacrylate, dipentaerythritol diacrylate, dipentaerythritol hexaacrylate, sorbitol triacrylate, sorbitol tetraacrylate, sorbitol pentaacrylate, sorbitol hexaacrylate, tri(acryloyloxyethyl) isocyanurate, and a polyester acrylate oligomer.

Examples of methacrylic acid esters include tetramethylene glycol dimethacrylate, triethylene glycol dimethacrylate, polyethylene glycol dimethacrylate, neopentyl glycol dimethacrylate, trimethylolpropane trimethacrylate, trimethylolethane trimethacrylate, ethylene glycol dimethacrylate, 1,3-butanediol dimethacrylate, hexanediol dimethacrylate, pentaerythritol dimethacrylate, pentaerythritol trimethacrylate, pentaerythritol tetramethacrylate, dipentaerythritol dimethacrylate, dipentaerythritol hexamethacrylate, sorbitol trimethacrylate, sorbitol tetramethacrylate, bis[*p*-(3-methacryloxy-2-hydroxypropoxy)phenyl]dimethylmethane, and bis[*p-*(methacryloxyethoxy)phenyl]dimethylmethane. Among them, trimethylolpropane trimethacrylate and polyethylene glycol dimethacrylate are particularly preferable.

As examples of other esters, aliphatic alcohol-based esters described in JP-B-46-27926 (JP-B denotes a Japanese examined patent application publication), JP-B-51-47334 and JP-A-57-196231, those having an aromatic skeleton described in JP-A-59-5240, JP-A-59-5241, and JP-A-2-226149, those having an amino group described in JP-A-1-165613, etc. may also be used preferably.

The above-mentioned ester monomers may be used as a mixture.

Furthermore, specific examples of amide monomers including an amide of an aliphatic polyamine compound and an unsaturated carboxylic acid include methylenebisacrylamide, methylenebismethacrylamide, 1,6-hexamethylenebisacrylamide, 1,6-hexamethylenebismethacrylamide, diethylenetriaminetrisacrylamide, xylylenebisacrylamide, and xylylenebismethacrylamide.

Preferred examples of other amide-based monomers include those having a cyclohexylene structure described in JP-B-54-21726.

Furthermore, a urethane-based addition-polymerizable compound produced by an addition reaction of an isocyanate and a hydroxy group is also suitable, and specific examples thereof include a vinylurethane compound comprising two or more polymerizable vinyl groups per molecule in which a hydroxy group-containing vinyl monomer represented by Formula (i) below is added to a polyisocyanate compound having two or more isocyanate groups per molecule described in JP-B-48-41708.

CH₂=C(R)COOCH₂CH(R')OH (i)

wherein R and R' independently denote H or CH₃.

Furthermore, urethane acrylates described in JP-A-51-37193, JP-B-2-32293, and JP-B-2-16765, and urethane compounds having an ethylene oxide-based skeleton described in JP-B-58-49860, JP-B-56-17654, JP-B-62-39417, JP-B-62-39418 are also suitable.

Furthermore, by use of an addition-polymerizable compound having an amino structure in the molecule described in JP-A-63-277653, JP-A-63-260909, and JP-A-1-105238, a resin composition having very good curing speed can be obtained.

Other examples include polyester acrylates such as those described in JP-A-48-64183, JP-B-49-43191, and JP-B-52-30490, and polyfunctional acrylates and methacrylates such as epoxy acrylates formed by a reaction of an epoxy resin and (meth)acrylic acid. Examples also include specific unsaturated compounds described in JP-B-46-43946, JP-B-1-40337, and JP-B-1-40336, and vinylphosphonic acid-based compounds described in JP-A-2-25493. In some cases, perfluoroalkyl group-containing structures described in JP-A-61-22048 are suitably used. Moreover, those described as photocuring monomers or oligomers in the Journal of the Adhesion Society of Japan, Vol. 20, No. 7, pp. 300 to 308 (1984) may also be used.

Among these, Component B is preferably an acrylate (acrylic acid ester compound) or a methacrylate (methacrylic acid ester compound), and particularly preferably an ester of an aliphatic polyhydric alcohol and an acrylic acid or a methacrylic acid. Component B preferably contains 2 to 20 (meth)acryloyloxy groups, more preferably 2 to 8 (meth)acryloyloxy groups, even more preferably 2 to 6 (meth)acryloyloxy groups, and particularly preferably 2 or 3 (meth)acryloyloxy groups, in one molecule.

Among these, Component B preferably comprises at least one compound selected from the group consisting of trimethylolpropane trimethacrylate, methoxypolyethylene glycol methacrylate, and polyethylene glycol dimethacrylate.

The content of Component B contained in the resin composition for laser engraving is preferably 1 wt% to 90 wt%, more preferably 10 wt% to 80 wt%, yet more preferably 20 wt% to 75 wt%, and particularly preferably 30 wt% to 70 wt% relative to the total weight of the solids content. When the content is in the range described above, the relief-forming layer formed from the resin composition for laser engraving has excellent print durability.

### (Component C) Polymerization initiator

The resin composition for laser engraving of the present invention comprises (Component C) a polymerization initiator.

With regard to the polymerization initiator, one known to a person skilled in the art may be used without any limitations. Radical polymerization initiators, which are preferred polymerization initiators, are explained in detail below, but the present invention should not be construed as being limited to these descriptions.

In the present invention, as (Component C) the polymerization initiator, a radical polymerization initiator is preferable.

A radical polymerization initiator may be a photopolymerization initiator or a thermopolymerization initiator, but preferably is a thermopolymerization initiator.

In the present invention, preferable radical polymerization initiators include (a) aromatic ketones, (b) onium salt compounds, (c) organic peroxides, (d) thio compounds, (e) hexaallylbiimidazole compounds, (f) ketoxime ester compounds, (g) borate compounds, (h) azinium compounds, (i) metallocene compounds, (j) active ester compounds, (k) compounds having a carbon halogen bond, and (I) azo compounds. Hereinafter, although specific examples of the (a) to (I) are cited, the present invention is not limited to these.

In the present invention, when applies to the relief-forming layer of the flexographic printing plate precursor, from the viewpoint of engraving sensitivity and making a favorable relief edge shape, (c) organic peroxides and (I) azo compounds are more preferable, and (c) organic peroxides are particularly preferable.

The (a) aromatic ketones, (b) onium salt compounds, (d) thio compounds, (e) hexaallylbiimidazole compounds, (f) ketoxime ester compounds, (g) borate compounds, (h) azinium compounds, (i) metallocene compounds, (j) active ester compounds, and (k) compounds having a carbon halogen bonding may preferably include compounds described in paragraphs 0074 to 0118 of JP-A-2008-63554.

Moreover, (c) organic peroxides and (I) azo compounds preferably include the following compounds.

### (c) Organic peroxides

Preferable (c) organic peroxides as a polymerization initiator that can be used in the present invention include preferably a peroxide ester such as 3,3',4,4'-tetra(*t*-butylperoxycarbonyl)benzophenone, 3,3',4,4'-tetra(*t*-amylperoxycarbonyl)benzophenone, 3,3',4,4'-tetra(*t-*hexylperoxycarbonyl)benzophenone, 3,3',4,4'-tetra(*t-*octylperoxycarbonyl)benzophenone, 3,3',4,4'-tetra(cumylperoxycarbonyl)benzophenone, 3,3',4,4'-tetra(*p-*isopropylcumylperoxycarbonyl)benzophenone, *t*-butylperoxybenzoate and di-*t*-butyldiperoxyisophthalate.

### (I) Azo compounds

Preferable (I) azo compounds as a polymerization initiator that can be used in the present invention include those such as 2,2'-azobisisobutyronitrile, 2,2'-azobispropionitrilo, 1,1'-azobis(cyclohexane-1-carbonitrile), 2,2'-azobis(2-methylbutyronitrile), 2,2'-azobis(2,4-dimethylvaleronitrile), 2,2'-azobis(4-methoxy-2,4-dimethylvaleronitrile), 4,4'-azobis(4-cyanovaleric acid), dimethyl 2,2'-azobis(isobutyrate), 2,2'-azobis(2-methylpropionamideoxime), 2,2'-azobis[2-(2-imidazolin-2-yl)propane], 2,2'-azobis{2-methyl-*N*-[1,1-bis(hydroxymethyl)-2-hydroxyethyl]propionamide}, 2,2'-azobis[2-methyl-N-(2-hydroxyethyl)propionamide], 2,2'-azobis(*N*-butyl-2-methylpropionamide), 2,2'-azobis(*N*-cyclohexyl-2-methylpropionamide), 2,2'-azobis[*N*-(2-propenyl)-2-methyl-propionamide], 2,2'-azobis(2,4,4-trimethylpentane).

In the present invention, the (c) organic peroxide is particularly preferable as the polymerization initiator in the present invention from the viewpoint of the crosslinking properties of the film (relief-forming layer) and improving the engraving sensitivity.

From the viewpoint of the engraving sensitivity, an embodiment obtained by combining (c) an organic peroxide and, Component B and a photothermal conversion agent described below is particularly preferable.

This is presumed as follows. When the relief-forming layer is cured by thermal crosslinking using an organic peroxide, an organic peroxide that did not play a part in radical generation and has not reacted remains, and the remaining organic peroxide works as an autoreactive additive and decomposes exothermally in laser engraving. As the result, energy of generated heat is added to the radiated laser energy to thus raise the engraving sensitivity.

It will be described in detail in the explanation of photothermal converting agent, the effect thereof is remarkable when carbon black is used as the photothermal converting agent. It is considered that the heat generated from the carbon black is also transmitted to (c) an organic peroxide and, as the result, heat is generated not only from the carbon black but also from the organic peroxide, and that the generation of heat energy to be used for the decomposition of Component A etc. occurs synergistically.

Component C in the resin composition of the present invention may be used singly or in a combination of two or more compounds.

The content of Component C in the resin composition of the present invention is preferably 0.1 to 5 wt% relative to the total weight of the solids content, more preferably 0.3 to 3 wt%, particularly preferably 0.5 to 1.5 wt%. When the content of Component C is in the range described above, excellent rinsing properties and ink transfer properties can be obtained.

If the content of Component C is in the range described above, the resin composition has excellent rinsing properties and excellent ink transfer properties, which is preferable.

### (Component D) Silica particles

The resin composition for laser engraving of the present invention preferably comprises (Component D) silica particles. When the resin composition for laser engraving of the present invention comprises Component D, rinsing properties and ink transfer properties are further improved.

According to the present invention, it is preferable for the silica particles that the number average particle size is 0.01 µm or more and 10 µm or less. When the number average particle size is in the range described above, tackiness can be reduced, the effect on the surface roughness of the printing plate precursor is small, and pattern formation by laser engraving is enabled without any defects occurring in printed images. Furthermore, it is preferable that the silica particles are porous fine particles or poreless ultrafine particles. Among these, Component D is preferably porous fine particles. When the fine particles are porous, the contact area with the matrix material is increased, and as a result, compositization with the matrix material is strengthened, the film strength is enhanced, and print durability is enhanced, which is preferable. Furthermore, when the fine particles are porous, the absorption efficiency of engraving residue, particularly the absorption efficiency of liquid engraving residue is increased, and the rinsing properties of engraving residue are also improved, which is preferable.

The number average particle size of Component B is preferably 0.01 µm to 20 µm, more preferably 0.01 µm to 15 µm, even more preferably 0.01 µm to 10 µm, particularly preferably 0.5 µm to 8 µm, and most preferably 1 µm to 5 µm.

Here, the number average particle size of the particles means an average value of the values of the major axis measured by microscopic observation. Specifically, the magnification is adjusted such that at least about 50 particles fit in the visual field of the microscope, and the major axes of the particles are measured. It is preferable to use a microscope having a measuring function, but the dimension may also be measured based on an image taken using a camera.

### <Porous fine particles>

The porous fine particles are defined as fine particles having fine pores which have a fine pore volume of 0.1 ml/g or greater, or fine particles having fine voids. As the resin composition includes porous fine particles, when the surface of the relief-forming layer is made to have a desired surface roughness, processing is facilitated. Examples of the processing include cutting, grinding, or polishing. By addition of the porous fine particles, the tackiness of the residue and the like occurring during the processing at the time of obtaining a desired surface roughness is reduced, and precision processing of the relief-forming layer surface is facilitated.

The porous fine particles are preferably such that the specific surface area is 10 m²/g or more and 1,500 m²/g or less, the average fine pore diameter is 1 nm or more and 1,000 nm or less, the fine pore volume is 0.1 ml/g or more and 10 ml/g or less, and the oil absorption is 10 ml/100 g or more and 2,000 ml/100 g or less. The specific surface area can be determined based on the BET equation from an adsorption isotherm of nitrogen at -196°C. Furthermore, in the measurement of the fine pore volume and the average fine pore diameter, a nitrogen adsorption method is used. The measurement of the oil absorption is carried out according to JIS-K5101. When the specific surface area of the porous fine particles is in the range described above, for example, in the case of forming image areas by engraving using a laser on a printing plate precursor, it is suitable for absorbing decomposition products that have been removed.

The number average particle size of the porous fine particles is preferably 0.01 µm or more and 10 µm or less. The number average particle size is more preferably 0.5 µm or more and 8 µm or less, and yet more preferably 1 µm or more and 5 µm or less. When the number average particle size is in the range described above, tackiness in the cutting, grinding and polishing processes can be reduced, the effect on the surface roughness of the printing plate precursor is small, and pattern formation by laser engraving is enabled without any defects occurring in printed images.

The shape of the porous fine particles is not particularly limited, and particles having a spherical shape, a flat shape or a needle shape, amorphous particles, or particles having protrusions on the surface can be used. Particularly, from the viewpoint of wear resistance, it is preferable that at least 70% of the particles are spherical particles having a true sphericity in the range of from 0.5 to 1.

As an index defining the degree of sphericity of the porous fine particles, the true sphericity is defined. The true sphericity according to the present embodiment is defined as the ratio of the maximum value D₁ of a circle which, when the image of a porous fine particle is projected, completely fits in the projected figure, and the minimum value D₂ of a circle in which the projected figure completely fits in (D₁/D₂). In the case of a true sphere, the true sphericity is 1.0. The true sphericity of the porous fine particle is preferably 0.5 or more and 1.0 or less, and more preferably 0.7 or more and 1.0 or less. When the true sphericity is 0.5 or greater, wear resistance as in a printing plate is satisfactory. A true sphericity of 1.0 is the upper limit of the true sphericity. As for the porous fine particles, preferably 70% or more, and more preferably 90% or more, of the porous fine particles have a true sphericity of 0.5 or greater. As a method for measuring the true sphericity, a method of making measurement based on a photograph taken using a scanning electron microscope can be used. In that case, it is preferable to take photographs at a magnification at which at least 100 or more particles fit in the monitor screen. Furthermore, although the values of D₁ and D₂ are measured based on a photograph, it is preferable to process the photograph using an apparatus which digitalizes photographs, such as a scanner, and then processing the data using an image analysis software.

Furthermore, it is also possible to use particles having cavities inside the particles, or spherical granules having a uniform fine pore diameter, such as silica sponge. Although not particularly limited, examples include porous silica, mesoporous silica, silica-zirconia porous gel, and porous glass. Furthermore, as in the case of layered clay compounds, since the fine pore diameter cannot be defined in materials in which voids having a size of several nanometers (nm) to several hundred nanometers (nm) are present between layers, according to the present invention, the interval of the voids present between the layers is defined as the fine pore diameter.

Furthermore, the surfaces of the porous fine particles are coated with a silane coupling agent, a titanate coupling agent or another organic compound to perform a surface modification treatment, and thus further hydrophilized or hydrophobized particles can also be used. One kind or two or more kinds of these porous fine particles can be selected.

### <Poreless ultrafine particles>

The poreless ultrafine particles according to the present embodiment are defined as particles having a fine pore volume of less than 0.1 ml/g. The number average particle size of the poreless ultrafine particles is the number average particle size directed to primary particles, and is preferably 10 nm or more and 500 nm or less, and more preferably least 10 nm or more and 100 nm or less. When the number average particle size is in this range, tackiness in the cutting, grinding and polishing processes can be reduced, the effect of the poreless ultrafine particles on the surface roughness of the flexographic printing plate precursor is small, and pattern formation by laser engraving is enabled without any defects occurring in the printed images.

The content of Component D in the resin composition for laser engraving of the present invention is not particularly limited, but the content is preferably in the range of 1 to 30 wt%, more preferably in the range of 3 to 20 wt%, and most preferably 5 to 15 wt%, relative to the total solids content.

When the content of Component D is in the range described above, the effect of Component D on the surface roughness of the printing plate precursor is small, and tackiness can be reduced without any defects occurring in the printed images, which is preferable. Moreover, rinsing properties of the engraving residue and ink transfer properties are excellent, which is preferable.

### (Component E) Photothermal conversion agent

The resin composition for laser engraving of the present invention preferably further comprises (Component E) a photothermal conversion agent. That is, it is considered that the photothermal conversion agent in the present invention can promote the thermal decomposition of a cured material during laser engraving by absorbing laser light and generating heat. Therefore, it is preferable that a photothermal conversion agent capable of absorbing light having a wavelength of laser used for graving be selected.

When a laser (a YAG laser, a semiconductor laser, a fiber laser, a surface emitting laser, etc.) emitting infrared at a wavelength of 700 to 1,300 nm is used as a light source for laser engraving, it is preferable for the flexographic printing plate precursor for laser engraving which is produced by using the resin composition for laser engraving of the present invention to comprise a photothermal conversion agent that has a maximun absorption wavelength at 700 to 1,300 nm.

As the photothermal conversion agent in the present invention, various types of dye or pigment are used.

With regard to the photothermal conversion agent, examples of dyes that can be used include commercial dyes and known dyes described in publications such as 'Senryo Binran' (Dye Handbook) (Ed. by The Society of Synthetic Organic Chemistry, Japan, 1970). Specific examples include dyes having a maximum absorption wavelength at 700 to 1,300 nm, and preferable examples include azo dyes, metal complex salt azo dyes, pyrazolone azo dyes, naphthoquinone dyes, anthraquinone dyes, phthalocyanine dyes, carbonium dyes, diimmonium compounds, quinone imine dyes, methine dyes, cyanine dyes, squarylium colorants, pyrylium salts, and metal thiolate complexes. In particular, cyanine-based colorants such as heptamethine cyanine colorants, oxonol-based colorants such as pentamethine oxonol colorants, and phthalocyanine-based colorants are preferably used. Examples include dyes described in paragraphs 0124 to 0137 of JP-A-2008-63554.

With regard to the photothermal conversion agent used in the present invention, examples of pigments include commercial pigments and pigments described in the Color Index (C.I.) Handbook, 'Saishin Ganryo Binran' (Latest Pigments Handbook) (Ed. by Nippon Ganryo Gijutsu Kyokai, 1977), 'Saishin Ganryo Ouyogijutsu' (Latest Applications of Pigment Technology) (CMC Publishing, 1986), and 'Insatsu Inki Gijutsu' (Printing Ink Technology) (CMC Publishing, 1984). Examples of pigments include pigments described in paragraphs 0122 to 0125 of JP-A-2009-178869.

Among these pigments, carbon black is preferable.

Any carbon black, regardless of classification by ASTM (American Society for Testing and Materials) and application (e.g. for coloring, for rubber, for dry cell, etc.), may be used as long as dispersibility, etc. in the resin composition for laser engraving is stable. Carbon black includes for example furnace black, thermal black, channel black, lamp black, and acetylene black. In order to make dispersion easy, a black colorant such as carbon black may be used as color chips or a color paste by dispersing it in nitrocellulose or a binder in advance using, as necessary, a dispersant, and such chips and paste are readily available as commercial products. Examples of carbon black include carbon blacks described in paragraphs 0130 to 0134 of JP-A-2009-178869.

The photothermal conversion agent in the resin composition of the present invention may be used singly or in a combination of two or more compounds.

The content of the photothermal conversion agent in the resin composition for laser engraving of the present invention may vary greatly with the magnitude of the molecular extinction coefficient inherent to the molecule, but the content is preferably 0.01 wt% to 30 wt%, more preferably 0.05 wt% to 20 wt%, and particularly preferably 0.1 wt% to 10 wt%, relative to the total solids weight of the resin composition.

Various components other than Component A to Component E, which the resin composition of the present invention may comprise, are explained below.

### <Plasticizer>

The resin composition for laser engraving of the present invention may comprise a plasticizer.

A plasticizer has an action of softening the film formed from the resin composition for laser engraving, and needs to have good compatibility with the binder polymers.

As the plasticizer, for example, dioctyl phthalate, didodecyl phthalate, bisbutoxyethyl adipate, polyethylene glycols, polypropylene glycols (monool type or diol type), and polypropylene glycols (monool type or diol type) may be preferably used.

Among these, bisbutoxyethyl adipate is particularly preferable.

Regarding the plasticizer for the resin composition of the present invention, one kind may be used alone, or two or more kinds may be used in combination.

### <Solvent>

Solvent is preferably used when preparing the resin composition for laser engraving of the present invention.

It is preferable to use an organic solvent.

Specific preferred examples of the aprotic organic solvent include acetonitrile, tetrahydrofuran, dioxane, toluene, propylene glycol monomethyl ether acetate, methyl ethyl ketone, acetone, methyl isobutyl ketone, ethyl acetate, butyl acetate, ethyl lactate, *N*,*N*-dimethylacetamide, N-methylpyrrolidone, and dimethyl sulfoxide.

Specific preferred examples of the protic organic solvent include methanol, ethanol, 1-propanol, 2-propanol, 1-butanol, 1-methoxy-2-propanol, ethylene glycol, diethylene glycol, and 1,3-propanediol.

Among these, propylene glycol monomethyl ether acetate is particularly preferable.

### <Other additives>

The resin composition for laser engraving of the present invention may comprise as appropriate various types of known additives as long as the effects of the present invention are not inhibited. Examples include a filler, a wax, a process oil, a metal oxide, an antiozonant, an anti-aging agent, a polymerization inhibitor, and a colorant, and one type thereof may be used on its own or two more types may be used in combination.

### (Flexographic printing plate precursor for laser engraving)

A first embodiment of the flexographic printing plate precursor for laser engraving of the present invention comprises a relief-forming layer formed from the resin composition for laser engraving of the present invention.

A second embodiment of the flexographic printing plate precursor for laser engraving of the present invention comprises a crosslinked relief-forming layer formed by crosslinking a relief-forming layer formed from the resin composition for laser engraving of the present invention.

In the present invention, the 'flexographic printing plate precursor for laser engraving' means both or one of a flexographic printing plate precursor having a crosslinkable relief-forming layer formed from the resin composition for laser engraving in a state before being crosslinked and a flexographic printing plate precursor in a state in which it is cured by light or heat.

The flexographic printing plate for laser engraving of the present invention preferably comprises a thermally crosslinked relief-froming layer.

In the present invention, the 'relief-forming layer' means a layer in a state before being crosslinked, that is, a layer formed from the resin composition for laser engraving of the present invention, which may be dried as necessary.

In the present invention, the 'crosslinked relief-forming layer' refers to a layer obtained by crosslinking the aforementioned relief-forming layer. The crosslinking can be performed by light and/or heat, and the crosslinking by heat is preferable. Moreover, the crosslinking is not particularly limited only if it is a reaction that cures the resin composition, and is a general idea that includes the crosslinked structure by the reaction of Component A with each other. The crosslinked structure may be formed by reacting Component A with other components such as Component C.

The 'flexographic printing plate' is made by laser engraving the printing plate precursor having the crosslinked relief-forming layer.

Moreover, in the present invention, the 'relief layer' means a layer of the flexographic printing plate formed by engraving using a laser, that is, the crosslinked relief-forming layer after laser engraving.

A flexographic printing plate precursor for laser engraving of the present invention comprises a relief-forming layer formed from the resin composition for laser engraving of the present invention, which has the above-mentioned components. The (crosslinked) relief-forming layer is preferably provided above a support.

The flexographic printing plate precursor for laser engraving may further comprise, as necessary, an adhesive layer between the support and the (crosslinked) relief-forming layer and, above the (crosslinked) relief-forming layer, a slip coat layer and a protection film.

### <Relief-forming layer>

The relief-forming layer is a layer formed from the resin composition for laser engraving of the present invention, and is a crosslinkable layer.

As a mode in which a flexographic printing plate is prepared using the flexographic printing plate precursor for laser engraving, a mode in which a flexographic printing plate is prepared by crosslinking a relief-forming layer to thus form a flexographic printing plate precursor having a crosslinked relief-forming layer, and the crosslinked relief-forming layer (hard relief-forming layer) is then laser-engraved to thus form a relief layer is preferable. By crosslinking the relief-forming layer, it is possible to prevent abrasion of the relief layer during printing, and it is possible to obtain a flexographic printing plate having a relief layer with a sharp shape after laser engraving.

The relief-forming layer may be formed by molding the resin composition for laser engraving that has the above-mentioned components for a relief-forming layer into a sheet shape or a sleeve shape. The relief-forming layer is usually provided above a support, which is described later, but it may be formed directly on the surface of a member such as a cylinder of equipment for plate producing or printing or may be placed and immobilized thereon, and a support is not always required.

A case in which the relief-forming layer is mainly formed in a sheet shape is explained as an Example below.

### <Support>

A material used for the support of the flexographic printing plate precursor for laser engraving is not particularly limited, but one having high dimensional stability is preferably used, and examples thereof include metals such as steel, stainless steel, or aluminum, plastic resins such as a polyester (e.g. polyethylene terephthalate (PET), polybutylene terephthalate (PBT), or polyacrylonitrile (PAN)) or polyvinyl chloride, synthetic rubbers such as styrene-butadiene rubber, and glass fiber-reinforced plastic resins (epoxy resin, phenolic resin, etc.). As the support, a PET film or a steel substrate is preferably used. The configuration of the support depends on whether the relief-forming layer is in a sheet shape or a sleeve shape.

### <Adhesive layer>

An adhesive layer may be provided between the relief-forming layer and the support for the purpose of strengthening the adhesion between the two layers.

Examples of materials (adhesives) that can be used in the adhesive layer include those described in 'Handbook of Adhesives', Second Edition, Ed by I. Skeist, (1977).

### <Protection film, slip coat layer>

For the purpose of preventing scratches or dents in the relief-forming layer surface or the crosslinked relief-forming layer surface, a protection film may be provided on the relief-forming layer surface or the crosslinked relief-forming layer surface. The thickness of the protection film is preferably 25 to 500 µm, and more preferably 50 to 200 µm. The protection film may employ, for example, a polyester-based film such as PET or a polyolefin-based film such as PE (polyethylene) or PP (polypropylene). The surface of the film may be made matte. The protection film is preferably peelable.

When the protection film is not peelable or conversely has poor adhesion to the relief-forming layer, a slip coat layer may be provided between the two layers. The material used in the slip coat layer preferably employs as a main component a resin that is soluble or dispersible in water and has little tackiness, such as polyvinyl alcohol, polyvinyl acetate, partially saponified polyvinyl alcohol, a hydroxyalkylcellulose, an alkylcellulose, or a polyamide resin.

### (Process for producing flexographic printing plate precursor for laser engraving)

Formation of a relief-forming layer in the flexographic printing plate precursor for laser engraving is not particularly limited, and examples thereof include a method in which a resin composition for laser engraving is prepared, solvent is removed from this coating solution composition for laser engraving, and it is then melt-extruded onto a support. Alternatively, a method may be employed in which a resin composition for laser engraving is cast onto a support, and this is dried in an oven to thus remove solvent from the resin composition.

Among them, the process for producing a flexographic printing plate precursor for laser engraving of the present invention is preferably a production process comprising a layer formation step of forming a relief-forming layer from the resin composition for laser engraving of the present invention and a crosslinking step of crosslinking the relief-forming layer by means of heat and/or light to thus obtain a flexographic printing plate precursor having a crosslinked relief-forming layer, and is more preferably a production process comprising a layer formation step of forming a relief-forming layer from the resin composition for laser engraving of the present invention, a crosslinking step of crosslinking the relief-forming layer by means of heat to thus obtain a flexographic printing plate precursor having a crosslinked relief-forming layer.

Subsequently, as necessary, a protection film may be laminated on the relief-forming layer. Laminating may be carried out by compression-bonding the protection film and the relief-forming layer by means of heated calendar rollers, etc. or putting a protection film into intimate contact with a relief-forming layer whose surface is impregnated with a small amount of solvent.

When a protection film is used, a method in which a relief-forming layer is first layered on a protection film and a support is then laminated may be employed.

When an adhesive layer is provided, it may be dealt with by use of a support coated with an adhesive layer. When a slip coat layer is provided, it may be dealt with by use of a protection film coated with a slip coat layer.

### <Layer formation step>

The process for producing the flexographic printing plate precursor for laser engraving of the present invention preferably comprises a layer formation step of forming a relief-forming layer from the resin composition for laser engraving of the present invention.

Preferred examples of a method for forming the relief-forming layer include a method in which the resin composition for laser engraving of the present invention is prepared, solvent is removed as necessary from this resin composition for laser engraving, and it is then melt-extruded onto a support and a method in which the resin composition for laser engraving of the present invention is prepared, the resin composition for laser engraving of the present invention is cast onto a support, and this is dried in an oven to thus remove solvent.

The resin composition for laser engraving may be produced by, for example, dissolving or dispersing Component A to Component D, and optional components in an appropriate solvent.

The thickness of the (crosslinked) relief-forming layer in the flexographic printing plate precursor for laser engraving is preferably 0.05 to 10 mm before and after crosslinking, more preferably 0.05 to 7 mm, and yet more preferably 0.05 to 3 mm.

### <Crosslinking step>

The process for producing a flexographic printing plate precursor for laser engraving of the present invention is preferably a production process comprising a crosslinking step of crosslinking the relief-forming layer by means of light and/or heat to thus obtain a flexographic printing plate precursor having a crosslinked relief-forming layer.

When the relief-forming layer comprises a photopolymerization initiator, the relief-forming layer may be crosslinked by irradiating the relief-forming layer with actinic radiation that triggers the photopolymerization initiator.

It is preferable to apply light to the entire surface of the relief-forming layer. Examples of the light (also called 'actinic radiation') include visible light, UV light, and an electron beam, but UV light is most preferably used. When the side where there is a substrate, such as a relief-forming layer support, for fixing the relief-forming layer, is defined as the reverse face, only the front face need to be irradiated with light, but when the support is a transparent film through which actinic radiation passes, it is preferable to further irradiate from the reverse face with light as well. When a protection film is present, irradiation from the front face may be carried out with the protection film as it is or after peeling off the protection film. Since there is a possibility of polymerization being inhibited in the presence of oxygen, irradiation with actinic radiation may be carried out after superimposing a polyvinyl chloride sheet on the relief-forming layer and evacuating.

When the relief-forming layer comprises thermal polymerization initiator (the photopolymerization initiator can also be a thermal polymerization initiator), the relief-forming layer may be crosslinked by heating the flexographic printing plate precursor for laser engraving (step of crosslinking by means of heat). As heating means for carrying out crosslinking by heat, there can be cited a method in which a printing plate precursor is heated in a hot air oven or a far-infrared oven for a predetermined period of time and a method in which it is put into contact with a heated roller for a predetermined period of time.

As a method for crosslinking the relief-forming layer, from the viewpoint of the relief-forming layer being uniformly curable (crosslinkable) from the surface into the interior, crosslinking by heat is preferable.

Due to the relief-forming layer being crosslinked, firstly, a relief formed after laser engraving becomes sharp and, secondly, tackiness of engraving residue formed when laser engraving is suppressed. If an uncrosslinked relief-forming layer is laser-engraved, residual heat transmitted to an area around a laser-irradiated part easily causes melting or deformation of a part that is not targeted, and a sharp relief layer cannot be obtained in some cases. Furthermore, in terms of general properties of a material, the lower the molecular weight, the more easily it becomes a liquid than a solid, that is, there is a tendency for tackiness to increase. Engraving residue formed when engraving a relief-forming layer tends to have higher tackiness as larger amounts of low-molecular-weight materials are used. Since a polymerizable compound, which is a low-molecular-weight material, becomes a polymer by crosslinking, the tackiness of the engraving residue formed tends to decrease.

When the crosslinking step is a step of carrying out crosslinking by light, although equipment for applying actinic radiation is relatively expensive, since a printing plate precursor does not reach a high temperature, there are hardly any restrictions on starting materials for the printing plate precursor.

When the crosslinking step is a step of carrying out crosslinking by heat, although there is the advantage that particularly expensive equipment is not needed, since a printing plate precursor reaches a high temperature, it is necessary to carefully select the starting materials used while taking into consideration the possibility that a thermoplastic polymer, which becomes soft at high temperature, will deform during heating, etc.

During thermal crosslinking, it is preferable to add a thermopolymerization initiator. As the thermopolymerization initiator, a commercial thermopolymerization initiator for free radical polymerization may be used. Examples of such a thermopolymerization initiator include an appropriate peroxide, hydroperoxide, and azo group-containing compound. A representative vulcanizing agent may also be used for crosslinking. Thermal crosslinking may also be carried out by adding a heat-curable resin such as for example an epoxy resin as a crosslinking component to a layer.

### (Flexographic printing plate and process for making same)

The process for making a flexographic printing plate of the present invention preferably comprises an engraving step of laser-engraving a flexographic printing plate precursor having a crosslinked relief-forming layer produced by crosslinking a relief-forming layer comprising the resin composition for laser engraving of the present invention by means of light and/or heat, and more preferably comprises an engraving step of laser-engraving a flexographic printing plate precursor having a crosslinked relief-forming layer produced by thermally crosslinking a relief-forming layer comprising the resin composition for laser engraving of the present invention.

The flexographic printing plate of the present invention is a flexographic printing plate having a relief layer obtained by crosslinking and laser-engraving a layer formed from the resin composition for laser engraving of the present invention, and is preferably a flexographic printing plate made by the process for producing a flexographic printing plate of the present invention.

The flexographic printing plate of the present invention may suitably employ an aqueous ink when printing.

The layer formation step and the crosslinking step in the process for producing a flexographic printing plate of the present invention mean the same as the layer formation step and the crosslinking step in the above-mentioned process for producing a flexographic printing plate precursor for laser engraving, and preferred ranges are also the same.

### <Engraving step>

The process for producing a flexographic printing plate of the present invention preferably comprises an engraving step of laser-engraving the flexographic printing plate precursor having a crosslinked relief-forming layer.

The engraving step is a step of laser-engraving a crosslinked relief-forming layer that has been crosslinked in the crosslinking step to thus form a relief layer. Specifically, it is preferable to engrave a crosslinked relief-forming layer that has been crosslinked with laser light according to a desired image, thus forming a relief layer. Furthermore, a step in which a crosslinked relief-forming layer is subjected to scanning irradiation by controlling a laser head using a computer in accordance with digital data of a desired image can preferably be cited.

This engraving step preferably employs an infrared laser. When irradiated with an infrared laser, molecules in the crosslinked relief-forming layer undergo molecular vibration, thus generating heat. When a high power laser such as a carbon dioxide laser or a YAG laser is used as the infrared laser, a large quantity of heat is generated in the laser-irradiated area, and molecules in the crosslinked relief-forming layer undergo molecular scission or ionization, thus being selectively removed, that is, engraved. The advantage of laser engraving is that, since the depth of engraving can be set freely, it is possible to control the structure three-dimensionally. For example, for an area where fine halftone dots are printed, carrying out engraving shallowly or with a shoulder prevents the relief from collapsing due to printing pressure, and for a groove area where a fine outline character is printed, carrying out engraving deeply makes it difficult for ink the groove to be blocked with ink, thus enabling breakup of an outline character to be suppressed.

In particular, when engraving is carried out using an infrared laser that corresponds to the absorption wavelength of the photothermal conversion agent, it becomes possible to selectively remove the crosslinked relief-forming layer at higher sensitivity, thus giving a relief layer having a sharp image.

As the infrared laser used in the engraving step, from the viewpoint of productivity, cost, etc., a carbon dioxide laser (CO₂ laser) or a semiconductor laser is preferable. In particular, a fiber-coupled semiconductor infrared laser (FC-LC) is preferably used. In general, compared with a CO₂ laser, a semiconductor laser has higher efficiency laser oscillation, is less expensive, and can be made smaller. Furthermore, it is easy to form an array due to the small size. Moreover, the shape of the beam can be controlled by treatment of the fiber.

With regard to the semiconductor laser, one having a wavelength of 700 to 1,300 nm is preferable, one having a wavelength of 800 to 1,200 nm is more preferable, one having a wavelength of 860 to 1,200 nm is yet more preferable, and one having a wavelength of 900 to 1,100 nm is particularly preferable.

Furthermore, the fiber-coupled semiconductor laser can output laser light efficiently by being equipped with optical fiber, and this is effective in the engraving step in the present invention. Moreover, the shape of the beam can be controlled by treatment of the fiber. For example, the beam profile may be a top hat shape, and energy can be applied stably to the plate face. Details of semiconductor lasers are described in 'Laser Handbook 2^{nd} Edition' The Laser Society of Japan, and 'Applied Laser Technology' The Institute of Electronics and Communication Engineers, etc.

Moreover, as plate making equipment comprising a fiber-coupled semiconductor laser that can be used suitably in the process for making a flexographic printing plate employing the flexographic printing plate precursor of the present invention, those described in detail in JP-A-2009-172658 and JP-A-2009-214334 can be cited. Such equipment comprising a fiber-coupled semiconductor laser can be used to produce a flexographic printing plate of the present invention.

The process for producing a flexographic printing plate of the present invention may as necessary further comprise, subsequent to the engraving step, a rinsing step, a drying step, and/or a post-crosslinking step, which are shown below.

Rinsing step: a step of rinsing the engraved surface by rinsing the engraved relief layer surface with water or a liquid comprising water as a main component.

Drying step: a step of drying the engraved relief layer.

Post-crosslinking step: a step of further crosslinking the relief layer by applying energy to the engraved relief layer.

After the above-mentioned step, since engraving residue is attached to the engraved surface, a rinsing step of washing off engraving residue by rinsing the engraved surface with water or a liquid comprising water as a main component may be added. Examples of rinsing means include a method in which washing is carried out with tap water, a method in which high pressure water is spray-jetted, and a method in which the engraved surface is brushed in the presence of mainly water using a batch or conveyor brush type washout machine known as a photosensitive resin letterpress plate processor, and when slime due to engraving residue cannot be eliminated, a rinsing liquid to which a soap or a surfactant is added may be used.

When the rinsing step of rinsing the engraved surface is carried out, it is preferable to add a drying step of drying an engraved relief-forming layer so as to evaporate rinsing liquid.

Furthermore, as necessary, a post-crosslinking step for further crosslinking the relief layer may be added. By carrying out a post-crosslinking step, which is an additional crosslinking step, it is possible to further strengthen the relief formed by engraving.

The pH of the rinsing liquid that can be used in the present invention is preferably at least 9, more preferably at least 10, and yet more preferably at least 11. The pH of the rinsing liquid is preferably no greater than 14, more preferably no greater than 13.5, and yet more preferably no greater than 13.2. When in the above-mentioned range, handling is easy.

In order to set the pH of the rinsing liquid in the above-mentioned range, the pH may be adjusted using an acid and/or a base as appropriate, and the acid or base used is not particularly limited.

The rinsing liquid that can be used in the present invention preferably comprises water as a main component.

The rinsing liquid may contain as a solvent other than water a water-miscible solvent such as an alcohol, acetone, or tetrahydrofuran.

The rinsing liquid preferably comprises a surfactant.

From the viewpoint of removability of engraving residue and little influence on a flexographic printing plate, preferred examples of the surfactant that can be used in the present invention include betaine compounds (amphoteric surfactants) such as a carboxybetaine compound, a sulfobetaine compound, a phosphobetaine compound, an amine oxide compound, and a phosphine oxide compound.

Furthermore, examples of the surfactant also include known anionic surfactants, cationic surfactants, and nonionic surfactants. Moreover, a fluorine-based or silicone-based nonionic surfactant may also be used in the same manner.

With regard to the surfactant, one type may be used on its own or two or more types may be used in combination.

It is not necessary to particularly limit the amount of surfactant used, but it is preferably 0.01 to 20 wt% relative to the total weight of the rinsing liquid, and more preferably 0.05 to 10 wt%.

The flexographic printing plate of the present invention having a relief layer above the surface of an optional substrate such as a support may be produced as described above.

From the viewpoint of satisfying suitability for various aspects of printing, such as abrasion resistance and ink transfer properties, the thickness of the relief layer of the flexographic printing plate is preferably at least 0.05 mm but no greater than 10 mm, more preferably at least 0.05 mm but no greater than 7 mm, and yet more preferably at least 0.05 mm but no greater than 3 mm.

Furthermore, the Shore A hardness of the relief layer of the flexographic printing plate is preferably at least 50° but no greater than 90°. When the Shore A hardness of the relief layer is at least 50°, even if fine halftone dots formed by engraving receive a strong printing pressure from a letterpress printer, they do not collapse and close up, and normal printing can be carried out. Furthermore, when the Shore A hardness of the relief layer is no greater than 90°, even for flexographic printing with kiss touch printing pressure it is possible to prevent patchy printing in a solid printed part.

The Shore A hardness in the present specification is a value measured by a durometer (a spring type rubber hardness meter) that presses an indenter (called a pressing needle or indenter) into the surface of a measurement target at 25°C so as to deform it, measures the amount of deformation (indentation depth), and converts it into a numerical value.

The flexographic printing plate of the present invention is particularly suitable for printing by a flexographic printer using an aqueous ink, but printing is also possible when it is carried out by a letterpress printer using any of aqueous, oil-based, and UV inks, and printing is also possible when it is carried out by a flexographic printer using a UV ink. The flexographic printing plate of the present invention has excellent rinsing properties, there is no engraving residue, and has excellent printing durability, and printing can be carried out for a long period of time without plastic deformation of the relief layer or degradation of printing durability.

### Example

The present invention is explained in further detail below by reference to Examples and Comparative Examples, but the present invention should not be construed as being limited to these Examples. Furthermore, 'parts' in the description below means 'parts by weight', and '%' means '% by weight ', unless otherwise specified.

Moreover, the number-average molecular weight (Mn) and weight-average molecular weight (Mw) of a polymer in the Examples are values measured by a GPC method unless otherwise specified.

Synthesis of the plastomer will be described below.

### <Synthesis of polyester urethane (P-1)>

A liquid unsaturated polyester resin (1) was obtained by a water condensation reaction of heating in a nitrogen atmosphere a mixture prepared by mixing propylene glycol, diethylene glycol, adipic acid, fumaric acid and isophthalic acid at a molar ratio of 0.13/0.39/0.24/0.14/0.12, and increasing the degree of vacuum in the system with a vacuum pump to remove water from the system. The unsaturated polyester resin (1) was produced by using a slightly excess amount of the diol component at the time of feeding, and thus the main chain ends thereof had hydroxyl groups (OH groups).

Thereafter, octyl isocyanate was added to the hydroxyl group of the main chain ends. Completion of the addition reaction was confirmed by the disappearance of the peak originating from an isocyanate group at 2,250 cm⁻¹ in the IR spectrum.

The polyester urethane (P-1) thus synthesized was liquid at room temperature, and the Mw (GPC) was 10,000.

### <Synthesis of polyester urethane (P-2) having C=C at main chain ends>

A liquid unsaturated polyester resin (1) was obtained by a water condensation reaction of heating in a nitrogen atmosphere a mixture prepared by mixing propylene glycol, diethylene glycol, adipic acid, fumaric acid, and isophthalic acid at a molar ratio of 0.13/0.39/0.24/0.14/0.12, and increasing the degree of vacuum in the system with a vacuum pump to remove water from the system. The unsaturated polyester resin (1) was produced by using a slightly excess amount of the diol component at the time of feeding, and thus the main chain ends thereof had hydroxyl groups (OH groups).

Thereafter, KARENZ MOI (2-isocyanatoethyl methacrylate, manufactured by Showa Denko K.K.) was added to the hydroxyl group of the main chain ends, and thereby an ethylenically unsaturated group (methacrylate group) was introduced into the ends. Completion of the addition reaction was confirmed by the disappearance of the peak originating from an isocyanate group at 2,250 cm⁻¹ in the IR spectrum.

The polyester urethane (P-2) thus synthesized was liquid at room temperature, and the Mw (GPC) was 11,000.

### <Synthesis of polyisoprene (P-3) having C=C at main chain ends>

KARENZ MOI (2-isocyanatoethyl methacrylate, manufactured by Showa Denko K.K.) was added to the OH groups of the main chain ends of polyisoprene polyol (LIR-506, manufactured by Kuraray Co., Ltd.), and thereby an ethylenically unsaturated group (methacrylate group) was introduced into the ends.

Completion of the addition reaction was confirmed by the disappearance of the peak originating from an isocyanate group at 2,250 cm⁻¹ in the IR spectrum.

The polyester urethane (P-3) thus synthesized was liquid at room temperature, and the Mn (GPC) was 26,000.

### <Synthesis of polybutadiene (P-4) having C=C at main chain ends>

KARENZ MOI (2-isocyanatoethyl methacrylate, manufactured by Showa Denko K.K.) was added to the OH groups of the main chain ends of polybutadienediol, POLY BD R-45H.

Completion of the addition reaction was confirmed by the disappearance of the peak originating from an isocyanate group at 2,250 cm⁻¹ in the IR spectrum.

The polyester urethane (P-4) thus synthesized was liquid at room temperature, and the Mn (GPC) was 3,000.

### Example 1

### 1. Preparation of resin composition for laser engraving

Into a three-necked flask equipped with a stirring blade and a cooling tube, 50 parts of 'KURAPRENE LIR-506' (manufactured by Kuraray Co., Ltd.) as Component A and 47 parts of propylene glycol monomethyl ether acetate as a solvent were introduced, and the mixture was heated at 70°C for 120 minutes while being stirred, to thereby dissolve the polymer. Subsequently, the solution was adjusted to 50°C, and 25 parts of BLENMER PDE-200 (manufactured by NOF Corp.) as (Component B) a polyfunctional ethylenically unsaturated compound, 0.5 parts of t-butyl peroxybenzoate (trade name: PERBUTYL Z, manufactured by NOF Corp.) as (Component C) a polymerization initiator, and 1 part of Ketjen Black EC600JD (carbon black, manufactured by Lion Corp.) as (Component E) a photothermal conversion agent were added to the solution. The mixture was stirred for 30 minutes. Through this operation, a coating liquid for crosslinkable relief-forming layer 1 (resin composition for laser engraving 1) having fluidity was obtained.

### 2. Production of flexographic printing plate precursor for laser engraving

A spacer (frame) having a predetermined thickness was installed on a PET substrate, and the coating liquid 1 for crosslinkable relief-forming layer obtained as described above was gently flow cast so as not to flow out over the spacer (frame), and was dried in an oven at 70°C for 3 hours. Thereafter, the system was further heated for 3 hours at 80°C and for another 3 hours at 100°C to thermally crosslink the relief-forming layer, and thus a crosslinked relief-forming layer having a thickness of approximately 1 mm was provided. Thus, a flexographic printing plate precursor for laser engraving 1 was produced.

### 3. Production of flexographic printing plate

The relief-forming layer after crosslinking (crosslinked relief-forming layer) was engraved with the following two kinds of lasers.

As a carbon dioxide gas laser engraving machine, a high-resolution CO₂ laser marker ML-9100 series (manufactured by Keyence Corp.) was used. A solid area which measured 1 cm on each of four sides was laser-engraved with the carbon dioxide laser engraving machine under the conditions of a power output of 12 W, a head speed of 20 mm/sec, and a pitch of 2,400 DPI.

As a semiconductor laser engraving machine, a laser recording apparatus equipped with a fiber-coupled semiconductor laser (FC-LD) SDL-6390 (manufactured by JDSU Corp., wavelength: 915 nm) having a maximum output power of 8.0 W was used. A solid area which measured 1 cm on each of four sides was laser-engraved with the semiconductor laser engraving machine under the conditions of a laser output power of 7.5 W, a head speed of 409 mm/sec, and a pitch of 2,400 DPI.

The thickness of the relief layer of the flexographic printing plate was approximately 1 mm.

### Examples 2 to 7 and Comparative Examples 1 to 4

### 1. Preparation of crosslinkable resin composition for laser engraving

Coating liquids for crosslinkable relief-forming layer (resin compositions for laser engraving) 2 to 7 and comparative coating liquids for crosslinkable relief-forming layer (resin compositions for laser engraving) 1 to 4 were prepared in the same manner as in Example 1, except that Component A used in Example 1 was changed as indicated in the following Table 1.

In Examples 5 to 7 and Comparative Example 2, 5 parts of the silica particles indicated in Table 1 were added as (Component D) silica particles.

The details of Component A, Component B, Component C, Component D and the like used in the respective Examples and Comparative Examples are as follows.

### (Component A)

● KURAPRENE LIR-506 (Component A-1): polyisoprene polyol (number-average molecular weight: 25,000), oily at 20°C, manufactured by Kuraray Co., Ltd.
● Poly bd R-45 (Component A-2): polybutadienediol (hydroxyl group-terminated liquid polybutadiene), liquid at 20°C, manufactured by Idomitsu Kosan Co., Ltd.
● VYLON UR-3500 (Component A-3): polyester urethane resin, manufactured by Toyobo Co., Ltd.
● Polyester urethane (P-1) (Component A-3): see the above Synthesis Example for polyester urethane (P-1)
● Polyester urethane (P-2) (Component A-3, Comparative Example): see the above Synthesis Example for polyester urethane (P-2)
● Polyisoprene (P-3) (Component A-1, Comparative Example): see the above Synthesis Example for polyisoprene (P-3)
● Polybutadiene (P-4) (Component A-2, Comparative Example): see the above Synthesis Example for polybutadiene (P-4)

### (Component B)

● BLENMER PDE-200: polyethylene glycol dimethacrylate ((meth)acrylate compound), manufactured by NOF Corp.

### (Component C)

● PERBUTYL Z (organic peroxide): polymerization initiator, t-butyl peroxybenzoate, manufactured by NOF Corp.

### (Component D)

● SYLOSPHERE C-1504: porous spherical silica, number-average particle size: 4.5 µm, specific surface area: 520 m²/g, average fine pore diameter: 12 nm, fine pore volume: 1.5 ml/g, loss on ignition: 2.5 wt%, oil absorption: 290 ml/100 g, manufactured by Fuji Silysia Chemical, Ltd.
● SYLOPHOBIC 4004: hydrophobized porous silica (surface coating treated with alkyl-modified silicone), number-average particle size: 8 µm, specific surface area: 300 m²/g, average fine pore diameter: 17 nm, fine pore volume: 1.25 ml/g, loss on ignition: 5.0 wt%, oil absorption: 200 ml/100 g, manufactured by Fuji Silysia Chemical, Ltd.
● SYLYSIA 470: porous silica particles (non-spherical), average particle size: 14.1 µm, oil absorption: 180 g/100 g, specific surface area: 300 m²/g, average fine pore diameter: 17 nm, fine pore volume: 1.25 ml/g, loss on ignition: 5.0 wt%, oil absorption: 180 ml/100 g, manufactured by Fuji Silysia Chemical, Ltd.

### 2. Production of flexographic printing plate precursors for laser engraving

Flexographic printing plate precursors for laser engraving 2 to 7 of Examples, and flexographic printing plate precursors for laser engraving 1 to 4 of Comparative Examples were obtained in the same manner as in Example 1, except that the coating liquid for crosslinkable relief-forming layer 1 was changed respectively to the coating liquids for crosslinkable relief-forming layer 2 to 7, and the comparative coating liquids for crosslinkable relief-forming layer 1 to 4.

### 3. Production of flexographic printing plates

The relief-forming layers of the flexographic printing plate precursors for laser engraving 2 to 7 of Examples and the flexographic printing plate precursors for laser engraving 1 to 4 of Comparative Examples were thermally crosslinked in the same manner as in Example 1, and then the crosslinked relief-forming layers were engraved to form relief layers. Thereby, flexographic printing plates 2 to 7 of Examples and flexographic printing plates 1 to 4 of Comparative Examples were obtained.

The thickness of the relief layers carried by these flexographic printing plates was approximately 1 mm.

Furthermore, the Shore A hardness values of the relief layers were respectively measured by the measurement method described above, and all of the measured values were 75°.

### 4. Evaluation of flexographic printing plates

A performance evaluation of the flexographic printing plates was performed for the following items, and the results are shown in Table 1. The evaluation results obtained in the case of performing engraving with the carbon dioxide gas laser, and the evaluation results obtained in the case of performing engraving with the semiconductor laser were the same.

### (4-1) Rinsing properties of engraving residue

A laser-engraved plate was immersed in water, and the engraved area was rubbed 10 times with a toothbrush (manufactured by Lion Corp., CLINICA TOOTHBRUSH FLAT). Subsequently, the presence or absence of residue at the surface of the relief layer was checked with an optical microscope. A sample having no residue was rated as 1; a sample having almost no residue was rated as 2; a sample having a slight amount of residue remaining thereon was rated as 3; a sample having residue remaining thereon but to a level without any problem was rated as 4; and a sample having residue unremoved was rated as 5.

### (4-2) Ink transfer properties

A flexographic printing plate thus obtained was mounted on a printing machine (Model ITM-4, manufactured by lyo Kikai Seisakusho Co., Ltd.), and printing was continuously performed by using an aqueous ink AQUA SPZ16 Red (manufactured by Toyo Ink Manufacturing Co., Ltd.) as an ink, without diluting, and by using FULL COLOR FORM M 70 (manufactured by Nippon Paper Group, thickness: 100 µm) as printing paper. The degree of adherence of the ink in a solid area on the printed material at a length of 1,000 m from the initiation of printing was evaluated by visual observation.

The evaluation criteria were as follows: a sample which showed uniform ink adherence without any density unevenness even when viewed under an optical microscope was rated as 1; a sample which showed slight unevenness when viewed under an optical microscope but showed uniform ink adherence without any density unevenness when viewed by visual observation, was rated as 2; a sample which showed clear unevenness when viewed by visual observation was rated as 4; and a sample in an intermediate state between 2 and 4 was rated as 3.

**Table 1**

| | Component A | | Component D | Rinsing properties of engraving residue | Ink transfer properties |
|---|---|---|---|---|---|
| Example 1 | Component A-1 | KURAPRENE LIR-506 | - | 3 | 2 |
| Example 2 | Component A-2 | Poly bd | - | 3 | 2 |
| Example 3 | Component A-3 | VYLON UR-3500 | - | 3 | 1 |
| Example 4 | Component A-3 | Polyester urethane (P-1) | - | 3 | 1 |
| Example 5 | Component A-1 | KURAPRENE LIR-506 | SYLOSPHERE C-1504 | 1 | 2 |
| Example 6 | Component A-2 | Poly bd | SYLOPHOBIC 4004 | 1 | 2 |
| Example 7 | Component A-3 | Polyester urethane (P-1) | SYLYSIA 470 | 2 | 1 |
| Comparative Example 1 | Component A-3 (comparative) | Polyester urethane (P-2) | - | 5 | 3 |
| Comparative Example 2 | Component A-3 (comparative) | Polyester urethane (P-2) | SYLOPHOBIC 4004 | 4 | 4 |
| Comparative Example 3 | Component A-1 (comparative) | Polyisoprene (P-3) | - | 5 | 3 |
| Comparative Example 4 | Component A-2 (comparative) | Polybutadiene (P-4) | - | 5 | 3 |

From the results described above, it can be seen that according to the present invention, a flexographic printing plate having excellent rinsing properties upon engraving and excellent ink transferability upon printing, may be obtained.

## Claims

1. A resin composition for laser engraving, comprising:
(Component A) at least one polymer selected from the group consisting of following (Component A-1) to (Component A-3):
(Component A-1) a polyisoprene that is a plastomer at 20°C and does not have an ethylenically unsaturated group at the ends of the main chain,
(Component A-2) a polybutadiene that is a plastomer at 20°C and does not have an ethylenically unsaturated group at the ends of the main chain, and
(Component A-3) an unsaturated polyester urethane that is a plastomer at 20°C, has an ethylenically unsaturated group in the interior of the main chain, and does not have an ethylenically unsaturated group at the ends of the main chain;
(Component B) a polyfunctional ethylenically unsaturated compound; and
(Component C) a polymerization initiator.

2. The resin composition for laser engraving according to Claim 1, further comprising (Component D) silica particles.

3. The resin composition for laser engraving according to Claim 2, wherein the content of Component D in the resin composition is 5 wt% to 15 wt% relative to the total weight of the solids content.

4. The resin composition for laser engraving according to any one of Claims 1 to 3, further comprising (Component E) a photothermal conversion agent.

5. The resin composition for laser engraving according to any one of Claims 1 to 4, wherein Component A is Component A-3.

6. The resin composition for laser engraving according to any one of Claims 1 to 5, wherein the content of Component A in the resin composition is 30 wt% to 80 wt% relative to the total weight of the solids content.

7. A flexographic printing plate precursor for laser engraving, having a relief-forming layer comprising the resin composition for laser engraving according to any one of Claims 1 to 6.

8. A flexographic printing plate precursor for laser engraving according to claim 7, wherein the relief-forming layer is crosslinked by means of light and/or heat.

9. A process for producing a flexographic printing plate precursor for laser engraving, the process comprising,
a layer formation step of forming a relief-forming layer comprising the resin composition for laser engraving according to any one of Claims 1 to 6, and
a crosslinking step of crosslinking the relief-forming layer by means of light and/or heat to obtain a flexographic printing plate precursor having a crosslinked relief-forming layer.

10. The process for producing a flexographic printing plate precursor for laser engraving according to Claim 9, wherein the crosslinking step is a step of crosslinking the relief-forming layer by means of heat to obtain the flexographic printing plate precursor having the crosslinked relief-forming layer.

11. A process for making a flexographic printing plate, the process comprising, in the following order,
a step of preparing a flexographic printing plate precursor for laser engraving having a crosslinked relief-forming layer produced by crosslinking a relief-forming layer comprising the resin composition for laser engraving according to any one of Claims 1 to 6 by means of light and/or heat, and
an engraving step of laser-engraving the crosslinked relief-forming layer to form a relief layer.

12. A flexographic printing plate having a relief layer made by the process for making a flexographic printing plate according to Claim 11.

13. The flexographic printing plate according to Claim 12, wherein the thickness of the relief layer is at least 0.05 mm but no greater than 10 mm.

14. The flexographic printing plate according to Claim 12 or 13, wherein the Shore A hardness of the relief layer is at least 50° but no greater than 90°.

15. Use of the resin composition for laser engraving according to any one of Claims 1 to 6 in a flexographic printing plate precursor for laser engraving.
